# EUROPÄISCHE PATENTSCHRIFT

(11) **EP 2 911 309 B1**
(45) Veröffentlichungstag und Bekanntmachung des Hinweises auf die Patenterteilung: **03.05.2017**
(21) Anmeldenummer: 14199224.8
(22) Anmeldetag: 19.12.2014
(51) Int. Cl.: H04B 1/74, H04B 1/40, H04W 36/18

(54) **Funkgerät und Verfahren zum Übertragen von Informationen**
Radio and method of transmitting information
Appareil radio et procédé de transmission d'informations

(30) Priorität: 20.02.2014 DE 102014203093
(43) Veröffentlichungstag der Anmeldung: 26.08.2015
(73) Patentinhaber: Rohde & Schwarz GmbH & Co. KG, 81671 München (DE)
(72) Erfinder: Ebersberger, Michael, 82140 Olching (DE); Langguth, Torsten, Dr., 82008 Unterhaching (DE); Storn, Rainer, Dr., 85551 Kirchheim (DE)
(74) Vertreter: Körfer, Thomas

(56) Entgegenhaltungen:
- DE-A1-102007 033 914
- US-B1- 7 551 988
- US-B1- 7 831 255
- David L. Rockwell: "Future tactical communications: getting the JTRS", Aerospace America, 31. Januar 2010 (2010-01-31), Seiten 24-27, XP055196974, Gefunden im Internet: URL:http://www.aerospaceamerica.org/Docume nts/January%202010%20PDF%20Articles/Electr onics_Update_JAN2010.pdf [gefunden am 2015-06-19]

## Beschreibung

Die Erfindung betrifft ein Funkgerät sowie ein Verfahren zum Übertragen von Informationen.

In der Funkübertragung werden verschiedene Funkverfahren zum Übertragen von Informationen mit unterschiedlichen Kommunikationsteilnehmern eingesetzt. So sind viele Parameter entscheidend für die Wahl eines für die jeweilige Anforderung geeigneten Funkverfahrens. Einer dieser Parameter ist die Art der zu übertragenden Information, denn es ist beispielsweise entscheidend, ob Sprachinformation oder Dateninformation zu übertragen sind. Weiterhin sind die Entfernung zwischen den Kommunikationsteilnehmern, die Anzahl der Kommunikationsteilnehmer, die Art der Kommunikationsteilnehmer und/oder die technischen Voraussetzungen bei den einzelnen Kommunikationsteilnehmern als Parameter mitentscheidend für die Auswahl eines geeigneten Funkverfahrens.

Diese verschiedenen Funkverfahren sind idealerweise in einem einzigen Funkgerät verfügbar. So ist beispielsweise in der US 7,831,255 B1 ein System und ein Verfahren zum Bereitstellen von verschiedenen Funkverfahren in einem einzigen Gerät beschrieben. Hierbei wird eine einzige Datenschnittstelle mit einer Mehrzahl von Modems verbunden und über einen Umschalter an eine Vielzahl von Antennenschaltkreisen geschaltet. US 7551988 B1 und DE 102007033914 A1 beschreiben ähnliche Vorrichtungen. Obwohl die Umschaltung zwischen mehreren Funkverfahren ein komplexer Vorgang ist, der innerhalb des Funkgeräts eine Vielzahl von Modifikationen und Konfigurationsänderungen bedingt, erwartet ein Anwender heutzutage, dass die Umschaltung verzögerungsfrei durchgeführt werden kann. Dies gewinnt besonders an Bedeutung, wenn in einer Notfallsituation von einem gerade genutzten Funkverfahren in ein Notfallfunkverfahren umgeschaltet werden muss.

Wichtige Kernfunkverfahren, wie beispielsweise das Notfallfunkverfahren, müssen daher jederzeit im Funkgerät verfügbar sein und dürfen überdies nicht durch ein fehlerhaftes Verhalten anderer Funkverfahren gestört werden. Auch darf ein Wechsel auf ein Kernfunkverfahren nicht aufgrund von Fehlverhalten des Funkgeräts verhindert werden.

Es wird heutzutage versucht, die Fehlerfreiheit dieser Kernfunkverfahren durch komplexe Entwicklungsprozesse mit anschließender Zertifizierung durch eine autorisierte Zertifizierungsstelle abzusichern.

Unabhängig von den Kernfunkverfahren, die eine Mindestfunktionalität sicherstellen, sind additive Funkverfahren bekannt. Diese additiven Funkverfahren können auch nach Auslieferung des Funkgeräts an den Anwender in das Funkgerät eingebracht werden. Überdies können bereits vorhandene additive Funkverfahren nachträglich verändert und/oder ergänzt werden. Dabei ist sicherzustellen, dass diese additiven Funkverfahren die Kernfunkverfahren in keiner Weise beeinflussen und/oder eine neue Zertifizierung der Kernfunkverfahren erforderlich machen.

Daher ist es Aufgabe der hier vorliegenden Erfindung, ein Funkgerät sowie ein Verfahren zum Übertragen von Informationen bereitzustellen, mit dessen Hilfe zwischen verschiedenen Funkverfahren verzögerungsfrei und störungsfrei umgeschaltet werden kann.

Diese Aufgabe wird durch das im Anspruch 1 beanspruchte Funkgerät zum Übertragen von Informationen gelöst. Vorteilhafte Ausgestaltungen sind durch die Gegenstände der vom Anspruch 1 abhängigen Patentansprüche beschrieben.

Überdies wird die Aufgabe durch ein Verfahren gemäß Patentanspruch 12 gelöst. Vorteilhafte Ausgestaltungen des Verfahrens sind durch die Gegenstände der vom Anspruch 12 abhängigen Patentansprüche beschrieben.

Insbesondere wird die Aufgabe durch ein Funkgerät zum Übertragen von Informationen aufweisend eine Funkgerätesteuereinheit, zumindest eine Antenne, eine Antennen-Umschalteinheit und mindestens zwei Funkeinheiten gelöst. Erfindungsgemäß weist das Funkgerät eine statische Funkeinheit und zumindest eine dynamische Funkeinheit auf, wobei zumindest zwei der Funkeinheiten funkbereit sind, sodass mittels eines Umschaltsignals der Funkgerätesteuerung verzögerungsfrei zwischen den funkbereiten Funkeinheiten umgeschaltet werden kann.

Es wird hier davon ausgegangen, dass die Zeitdauer zum Wechseln von einem Funkverfahren auf ein alternatives Funkverfahren in Funkgeräten gemäß dem Stand der Technik maßgeblich durch die Komplexität des zu ladenden Funkverfahrens bestimmt wird. Dieses Wechseln ist aktuell nicht verzögerungsfrei realisierbar.

Die erfindungsgemäße Lösung sieht daher zumindest zwei Funkeinheiten vor, welche jederzeit funkbereit sind. Hier wird unter einem funkbereiten Funkverfahren ein Funkverfahren verstanden, welches bereits im Vorfeld des Wechsels eine Kommunikationsverbindung mit einem Kommunikationsteilnehmer aufgebaut hat, wobei das funkbereite Funkverfahren mittels des Funkgeräts entweder aktiv gehalten wird oder sich in einem Bereitschaftsmodus befindet und jederzeit aktivierbar ist.

Durch das Bereitstellen von zumindest zwei Funkeinheiten in einem Funkbereitschaftsmodus ist sichergestellt, dass eine unterbrechungsfreie Umschaltung zwischen verschiedenen Funkverfahren ermöglicht ist. Die Funkeinheiten unterscheiden sich dahingehend, dass jede der Funkeinheiten im Funkgerät ein spezifisches Funkverfahren anwendet. Die Funkverfahren unterscheiden sich insbesondere in Komplexität, Erweiterbarkeit, Art der zu übertragenden Information und Informationsdurchsatz pro Zeiteinheit.

In einer bevorzugten Ausgestaltung ist die statische Funkeinheit mit einem Zertifikat einer autorisierten Zertifizierungsstelle zertifiziert. Ein derartiges Zertifikat ist nur gültig für eine geprüfte Funkeinheit, die nicht nachträglich verändert, ergänzt und/oder adaptiert worden ist. Dabei weist das Funkgerät Mittel auf, die eine strikte Trennung zwischen der statischen Funkeinheit und den übrigen Funkeinheiten des Funkgeräts erlauben. Dazu ist die statische Funkeinheit eine geschlossene Funkeinheit, bei der keine Aktualisierung stattfinden kann. Für das Funkgerät gemäß der Erfindung sind viele unterschiedliche technische Standardisierungen vorgesehen, welche technische Vorschriften für den ordnungsgemäßen Betrieb des Funkgeräts beschreiben. Die korrekte Arbeitsweise des erfindungsgemäßen Funkgeräts gemäß einem dieser Standards wird mittels des Zertifikats der Zertifizierungsstelle angezeigt. Beispiele für derartige technische Standards sind insbesondere die Standards IEC62304 oder DIN EN60601 für die Medizintechnik; der Standard EN50128 für die Bahntechnik; der Standard IEC61508 für die Industrie; der Standard ISO26262 für die Automobilindustrie; die Standards DO-178B/C, ID-12B/C oder DO-254 für Avionik-Systeme sowie die Standards DO-278A oder ID-109A für die Luftverkehrskontrolle (englisch: Air Traffic Control, kurz ATC).

Ein Zertifikat gemäß einem der hier beschriebenen Standards bedingt, dass die statische Funkeinheit keine Aktualisierung von außen ermöglicht und unverändert betrieben wird. Somit kann nach der Produktion nicht mehr ohne Mitwirken des Herstellers von außen eine Aktualisierung erfolgen. Wird die statische Funkeinheit als geschlossenes System ausgeliefert, wird die Zertifizierung wesentlich erleichtert. Dabei ist der statisch implementierte Teil bevorzugt in der Funkeinheit minimal und einfach zu halten. Insbesondere ist die statische Funkeinheit autark von der dynamischen Funkeinheit oder den dynamischen Funkeinheiten hinsichtlich Spannungsversorgung, Kommandoübertragung, Setups, Antenne und Antennenschaltkreis und/oder einer Datenschnittstelle zum Erhalten der zu übertragenden Informationen.

In einer bevorzugten Ausgestaltung ist die zumindest eine dynamische Funkeinheit mittels einer Aktualisierungsinformation der Funkgerätesteuereinheit aktualisierbar. Dies hat den Vorteil, dass additive Funkverfahren in derartig dynamische Funkeinheiten integriert werden können. Bevorzugt kann die dynamische Funkeinheit an neuere Wellenformen, an komplexere und sichere Übertragungsverfahren sowie neuere Verschlüsselungsalgorithmen angepasst werden.

Damit wird das Funkgerät aufgrund derartiger dynamischer Funkeinheiten in vorteilhafter Weise zukunftssicher und ist stets auf dem neuestens Stand. Fehler in einem Funkverfahren der dynamischen Funkeinheit können einfach korrigiert werden. Diese dynamische Funkeinheit kann nach der Produktion von außen aktualisiert und verändert werden. Änderungen an diesen dynamischen Funkeinheiten haben keine Rückwirkungen auf die statische Funkeinheit mit dem darin statisch implementierten Funkverfahren, wodurch das Zertifikat der statischen Funkeinheit auch nach der Aktualisierung oder Veränderung einer der dynamischen Funkeinheiten nicht ungültig wird.

In einer bevorzugten Ausgestaltung ist die dynamische Funkeinheit nach dem Prinzip einer offenen Architektur, insbesondere der Software Communications Architecture, kurz SCA ausgestaltet. Diese offene Architektur regelt das Zusammenspiel von Hard- und Software in durch Software dynamisch modifizierbaren Funkeinheiten (englisch: software defined radios, kurz SDR). Die Hauptaufgabe dieser Architektur besteht darin, die dynamische Funkeinheit für variable Sender und Empfänger zu spezifizieren und die Funkeinheiten interoperabel auszugestalten.

Bevorzugt ist die Aktualisierungsinformation mittels eines externen Aktualisierungssignals an die Funkgerätesteuereinheit anschaltbar. Somit wird das Funkgerät von außen aktualisierbar und veränderbar ausgestaltet. Durch die Abkopplung von der statischen Funkeinheit wird das Zertifikat der statischen Funkeinheit nicht ungültig, sodass Kosten für den Betrieb des Funkgeräts gespart werden und überdies sichergestellt ist, dass die statische Funkeinheit unbeeinflusst und somit störungsfrei von der dynamischen Funkeinheit betreibbar ist. Das externe Aktualisierungssignal wird auf Anforderung eines Anwenders oder auf Basis der Funkgerätekonfiguration aufgrund der erkannten zu übertragenden Informationen generiert und an die Funkgerätsteuereinheit angeschaltet.

In einer bevorzugten Ausgestaltung sind die statische Funkeinheit und zumindest eine dynamische Funkeinheit parallel betreibbar, wobei zumindest eine der parallel betreibbaren Funkeinheiten zum Übertragen von Informationen aktiviert ist. Dies bedingt, dass diese parallel betreibbaren Funkeinheiten funkbereit sind. Dies ermöglicht ein schnelles und insbesondere verzögerungsfreies Umschalten zwischen den einzelnen Funkeinheiten. Dies ist insbesondere in einer Notfallsituation von großer Wichtigkeit.

Bevorzugt ist das Umschaltsignal ein externes Steuersignal. Somit ist das Umschalten auf ein anderes Funkverfahren von außerhalb des Funkgeräts erwirkbar. Ein Anwender kann explizit ein Kommando an die Funkgerätsteuereinheit senden. In einer alternativen Ausgestaltung wird anhand der zu übertragenen Information durch die Funkgerätsteuereinheit ein adäquates Funkverfahren ausgewählt.

Bevorzugt sind sowohl die statische Funkeinheit als auch die Funkgerätesteuereinheit unveränderbar im Funkgerät integriert. Somit erwirken diese beiden Einheiten eine Funktion als Hauptsteuerelemente, die das Funkgerät maßgeblich steuern. Aufgrund ihrer Unveränderbarkeit ist kein Zertifikatsverlust aufgrund von Änderungen in den dynamischen Funkeinheiten erwirkt. Dies erhöht einerseits die Ausfallsicherheit des Funkgeräts und vereinfacht andererseits die Zertifizierung des Funkgeräts.

In einer bevorzugten Ausgestaltung werden die Informationen über eine Datenschnittstelle an das Funkgerät angeschaltet, wobei in Abhängigkeit von der Art der Information zwischen den Funkeinheiten umgeschaltet wird. Über die Datenschnittstelle werden insbesondere analoge und digitale Informationen bereitgestellt. Die Datenschnittstelle ist eine bidirektionale Datenschnittstelle. Als Art der Information wird insbesondere unterschiedenen zwischen Sprachinformationen und Dateninformationen. Aufgrund der unterschiedlichen Art der Informationen ist mitunter das Auswählen eines alternativen Funkverfahrens notwendig. So ist beispielsweise bei der Übertragung von Daten als Information ein höherer Datendurchsatz erwünscht, wodurch das Funkverfahren im Allgemeinen komplexer ausgestaltet sein muss, um verlustfrei diese Informationen zu übertragen.

In einer bevorzugten Ausgestaltung weist die Datenschnittstelle eine Datensignal-Umschalteinheit auf, wobei die Datensignal-Umschalteinheit das Umschaltsignal der Funkgerätsteuereinheit empfängt. Auf diese Weise ist sichergestellt, dass in Abhängigkeit der Art von Information automatisch oder von extern getriggert ein Umschalten der Datenschnittstelle erfolgt.

In vorteilhafter Weise weist das Funkgerät zumindest eine erste dynamische Funkeinheit und eine zweite dynamische Funkeinheit auf. Die dynamischen Funkeinheiten sind entsprechend aktualisierbar und können mit alternativen und/oder komplexen Wellenformen adaptiert werden. Bevorzugt sind mehr als zwei dynamische Funkeinheiten vorgesehen, wodurch das Funkgerät für eine Vielzahl von unterschiedlichen Funkübertragungen verwendet werden kann.

Bevorzugt ist eine Antennen-Umschalteinheit im Funkgerät vorgesehen, um die jeweilige Funkeinheit an die Antenne zu schalten. Dabei ist insbesondere ein gemeinsamer Antennenschaltkreis vorgesehen, wodurch die Herstellung des Funkgeräts wesentlich vereinfacht ist und dadurch das Funkgerät kostengünstiger hergestellt werden kann. Eine Steuerung der Antennen-Umschalteinheit erfolgt bevorzugt durch die Funkgerätsteuereinheit.

Alternativ ist denkbar, mehrere Antennen vorzusehen, wobei jede Antenne einer Funkeinheit exklusiv zugeordnet ist. In vorteilhafter Weise kann dadurch in einem Adhoc-Verfahren umgeschaltet werden.

Das erfindungsgemäße Verfahren zum Übertragen von Informationen umfasst die Verfahrensschritte: Aufbau einer Funkverbindung mittels erstem Funkverfahren; Aufbau zumindest einer Funkverbindung mittels zweitem Funkverfahren; Aktivieren eines aufgebauten Funkverfahrens; Auswerten eines Steuersignals mittels der Funkgerätsteuereinheit; Überprüfen des Umschaltens auf alternatives Funkverfahren mittels der Funkgerätesteuereinheit; Umschalten auf alternatives Funkverfahren für den Fall, dass das Überprüfen ein Umschalten fordert; und Übertragen der Information mit alternativem Funkverfahren.

Durch das Aktivieren eines aufgebauten Funkverfahrens ist die Übertragung von Informationen ermöglicht. Dabei bleibt das entsprechend ebenfalls aufgebaute Funkverfahren weiterhin aktiv bzw. ist in einem Bereitschaftsmodus verfügbar. Dadurch ist in vorteilhafter Weise sofort zwischen den Funkverfahren umschaltbar und eine verzögerungsfreie Übertragung ist dadurch gewährleistet.

Bevorzugt wird vor dem Schritt des Umschaltens ein Umschaltsignal mittels der Funkgerätsteuereinheit erzeugt.

Bevorzugt wird zu irgendeinem Zeitpunkt eine Aktualisierungsaufforderung zumindest eines der aufgebauten Funkverfahren erhalten. Anschließend erfolgt ein Überprüfen der Umschalt-Notwendigkeit. Daraufhin erfolgt ein Umschalten auf ein alternatives Funkverfahren für den Fall, dass der Überprüfenschritt ein Umschalten fordert. Das zu aktualisierende Funkverfahren wird anschließend aktualisiert.

Der Schritt des Überprüfens ist notwendig, um zu erkennen, ob das zu aktualisierende Funkverfahren bereits aufgebaut und aktiviert ist und in Kommunikationsverbindung mit einem Kommunikationsteilnehmer steht. Ist dies der Fall, wäre eine Aktualisierung nicht möglich, ohne den Funkverkehr mit dem Kommunikationsteilnehmer zu stören oder zu behindern. In einem derartigen Fall ist das Umschalten auf ein alternatives Funkverfahren bevorzugt.

In einer bevorzugten Ausgestaltung wird vor dem Schritt des Umschaltens ein Umschaltsignal mittels der Funkgerätsteuereinheit erzeugt.

Nachfolgend werden anhand der Zeichnung die Erfindung, weitere Ausführungsformen und Vorteile der Erfindung beispielhaft näher erläutert, wobei die Figuren lediglich Ausführungsbeispiele der Erfindung beschreiben. Gleiche Bestandteile in den Figuren werden mit gleichen Bezugszeichen versehen. Es zeigen:
- Fig. 1: ein Blockschaltbild eines ersten Ausführungsbeispiels eines erfindungsgemäßen Funkgeräts,
- Fig. 2: ein zu Fig. 1 alternatives Ausführungsbeispiel eines erfindungsgemäßen Funkgeräts,
- Fig. 3: ein Verfahrensablaufdiagramm eines Ausführungsbeispiels eines erfindungsgemäßen Verfahrens, und
- Fig. 4: eine Weiterbildung des in Fig. 3 gezeigten erfindungsgemäßen Ausführungsbeispiels des Verfahrens

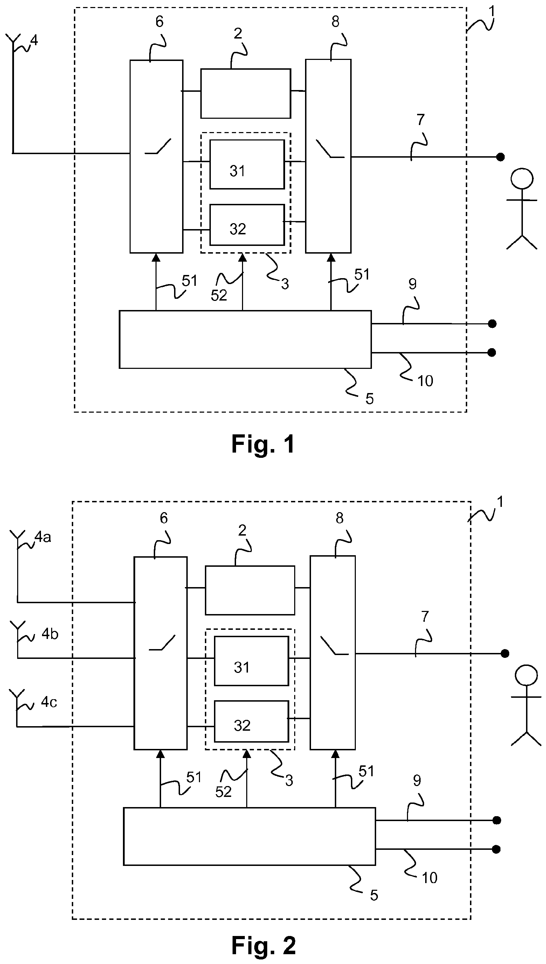

Fig. 1 zeigt ein Funkgerät 1 gemäß der Erfindung. Das Funkgerät 1 weist eine Antenne 4 und eine Datenschnittstelle 7 zu einem Anwender auf. Überdies weist das Funkgerät 1 eine Funkgerätsteuereinheit 5 auf. Die Funkgerätsteuereinheit 5 weist eine Schnittstelle zu einem Aktualisierungssignal 9 sowie eine Schnittstelle zu einem Steuersignal 10 auf. Das Steuersignal 10 ist vorgesehen, um dem Anwender oder einem Automat die Umschaltung zwischen den Funkverfahren zu ermöglichen. Mittels dieser Schnittstelle und dem Steuersignal 10 wird dem Funkgerät 1 angezeigt, dass zwischen den verschiedenen Funkverfahren zu unterscheiden ist. Über die Datenschnittstelle 7 können bidirektional Informationen, beispielsweise Dateninformationen und/oder Sprachinformationen zwischen dem Anwender und dem Funkgerät 1 ausgetauscht werden. Über die Aktualisierungsschnittstelle kann ein Aktualisierungssignal 9 an die Funkgerätsteuereinheit 5 geschaltet werden, um dem Funkgerät 1 anzuzeigen, dass ein additives Funkverfahren nachgeladen wird oder eine der dynamischen Funkeinheiten 3, 31, 32 ergänzt oder aktualisiert wird. Die Kernfunkverfahren, beispielsweise ein zertifiziertes Notfallfunkverfahren, werden dabei unverändert beibehalten.

Das Funkgerät 1 weist zumindest eine statische Funkeinheit 2 auf. Die statische Funkeinheit 2 enthält das Kernfunkverfahren und ist ebenso wie die Funkgerätesteuereinheit 5 als nichtveränderbarer Teil im Funkgerät 1 integriert. Die Funkgerätsteuereinheit 5 ist in Verbindung mit der statischen Funkeinheit 2 als Master im Funkgerät 1 integriert. Sowohl die statische Funkeinheit 2 als auch die Funkgerätsteuereinheit 5 können nach der Produktion nicht mehr von außen aktualisiert oder verändert werden. Insbesondere ist die statische Funkeinheit 2 von einer autorisierten Zertifizierungsstelle gemäß einem der oben genannten Standards zertifiziert. Somit ist eine Ausfallsicherheit des Funkgeräts 1 garantiert und die Zertifizierung aufgrund der Unveränderbarkeit dieser Komponenten im Funkgerät 1 erleichtert. Insbesondere ist die statische Funkeinheit 2 unabhängig von den dynamischen Funkeinheiten 3, die über die Schnittstelle 10 und die Schnittstelle 9 aktualisierbar sind.

Das Funkgerät 1 weist überdies zumindest eine dynamische Funkeinheit 3 auf. Gemäß Fig. 1 sind zwei voneinander unabhängige dynamische Funkeinheiten 31, 32 vorgesehen. Mittels des Umschaltsignals 51 zeigt die Funkgerätsteuereinheit 5 der Antennen-Umschalteinheit 6 sowie der Datensignal-Umschalteinheit 8 an, dass zwischen den verschiedenen Funkeinheiten 2, 3 umgeschaltet werden muss. Im Folgenden wird die Funktionsweise eines Funkgeräts 1 gemäß Fig. 1 näher erläutert.

Für das erfindungsgemäße Umschalten ist vorauszusetzen, dass zumindest zwei Funkeinheiten 2, 3 im Funkgerät 1 funkbereit sind, sodass diese Funkeinheiten 2, 3 insbesondere in einem Bereitschaftsmodus und/oder im aktivierten Zustand sind. Beispielhaft ist die Funkeinheit 2 und eine der dynamischen Funkeinheiten 3 aktiviert, sodass ein paralleles Betreiben möglich ist. Mittels der Datenschnittstelle 7 werden anwenderseitig Informationen zum Übertragen bereitgestellt oder aufgrund der bidirektionalen Ausgestaltung Informationen von der Antenne 4 an einen Anwender übertragen. In Abhängigkeit der Art der Information ist es sinnvoll, die Funkverfahren entsprechend anzupassen. So ist insbesondere zwischen der Sprachinformation und einer Dateninformation, die zu übertragen sind, zu unterscheiden.

Um nun einen verlustfreies und verzögerungsfreies Übertragen der Daten zu ermöglichen, ist vorgesehen, zwischen den einzelnen Funkverfahren umzuschalten. Dazu wird ein Steuersignal 10 an die Funkgerätsteuereinheit 5 im Funkgerät 1 bereitgestellt. Dieses Steuersignal zeigt an, welches Funkverfahren anzuwenden ist, um Daten und Informationen, die über eine Datenschnittstelle 7 an das Funkgerät 1 angeschaltet sind, zu übertragen. Erkennt das Funkgerät 1 über die Funkgerätsteuereinheit 5, dass das Funkverfahren umzuschalten ist, wird ein Umschaltsignal 51 an die Antennen-Umschalteinheit 6 sowie die Datensignal-Umschalteinheit 8 angeschaltet.

Adhoc wird von dem verwendeten Funkverfahren auf das alternative Funkverfahren umgeschaltet. Da beide Funkverfahren zumindest in einem Bereitschaftsmodus sind, ist das Umschalten verzögerungsfrei ermöglicht. Ein aufwendiges Nachladen des Funkverfahrens und Aktivieren bzw. Aufbauen der Kommunikationsverbindung zu dem Kommunikationsteilnehmer ist somit nicht nötig. Wertvolle Zeit, insbesondere in einer Notfallsituation, ist dadurch gespart. Der Antennen-Umschalteinheit 6 ist die Antenne 4 nachgeschaltet. Die Steuerung dieser Antennen-Umschalteinheit 6 erfolgt über die Funkgerätsteuereinheit 5. Diese Umschalteinheit 6 ist optional.

Durch das parallele Betreiben der Funkverfahren wird ein nahezu verzögerungsfreies Umschalten zwischen den einzelnen Funkverfahren gewährleistet. Dabei ist mindestens eine Funkeinheit 2, 3 aktiv und mindestens eine weitere Funkeinheit 2, 3 ist im Bereitschaftsmodus und kann bei Bedarf aktiviert werden, um sofort Daten zu empfangen oder zu senden.

Da die statische Funkeinheit 2 nicht aktualisierbar ist, bleibt das Zertifikat erhalten, auch wenn eines der dynamischen Funkeinheiten 3, 31, 32 aktualisiert wird. Insbesondere ist sichergestellt, dass ein Rückwirken der Erweiterung einer dynamischen Funkeinheit 3 auf die statische Funkeinheit 2 nicht erfolgt.

In Fig. 2 ist ein zu Fig. 1 alternatives Ausführungsbeispiel eines erfindungsgemäßen Funkgeräts 1 dargestellt. Im Folgenden wird lediglich auf die Unterschiede zwischen Fig. 1 und Fig. 2 eingegangen.

Im Unterschied zu Fig. 1 weist das Funkgerät 1 gemäß Fig. 2 eine erste Antenne 4a auf, die exklusiv für das Übertragen von Informationen mittels eines Funkverfahren der statischen Funkeinheit 2 vorgesehen ist. Überdies ist eine zweite Antenne 4b vorgesehen, die exklusiv für das Übertragen von Informationen mittels eines Funkverfahrens der ersten dynamischen Funkeinheit 31 vorgesehen ist. Überdies ist eine dritte Antenne 4c vorgesehen, die exklusiv für das Übertragen von Informationen mittels eines Funkverfahrens der zweiten dynamischen Funkeinheit 32 vorgesehen ist.

Das Verwenden einer Mehrzahl von Antennen ermöglicht, dass die Funkverfahren auch parallel betrieben werden können, sodass mehrere Funkverfahren gleichzeitig aktiv sind. Somit ist ein verzögerungsfreies Umschalten gewährleistet und insbesondere in Notfallsituationen eine Zeitersparnis erreicht.

Alternativ und in Fig. 2 nicht dargestellt ist vorgesehen, lediglich zwei Antennen im Funkgerät 1 anzuordnen, wobei eine erste Antenne exklusiv für die statische Funkeinheit 2 vorgesehen ist und eine zweite Antenne exklusiv für alle dynamischen Funkeinheiten 3, 31, 32 vorgesehen ist. Damit ist einerseits eine strikte physische Trennung beim Übertragen der Informationen mittels der statischen Funkeinheit 2 und beim Übertragen der Informationen mittels der dynamischen Funkeinheiten 3, 31, 32 erreicht. Andererseits werden die Kosten für die Herstellung des Funkgeräts 1 verringert, da sich die dynamischen Funkeinheiten 3, 31, 32 einen Antennenschaltkreis teilen, wodurch der Hardwareaufwand reduziert ist.

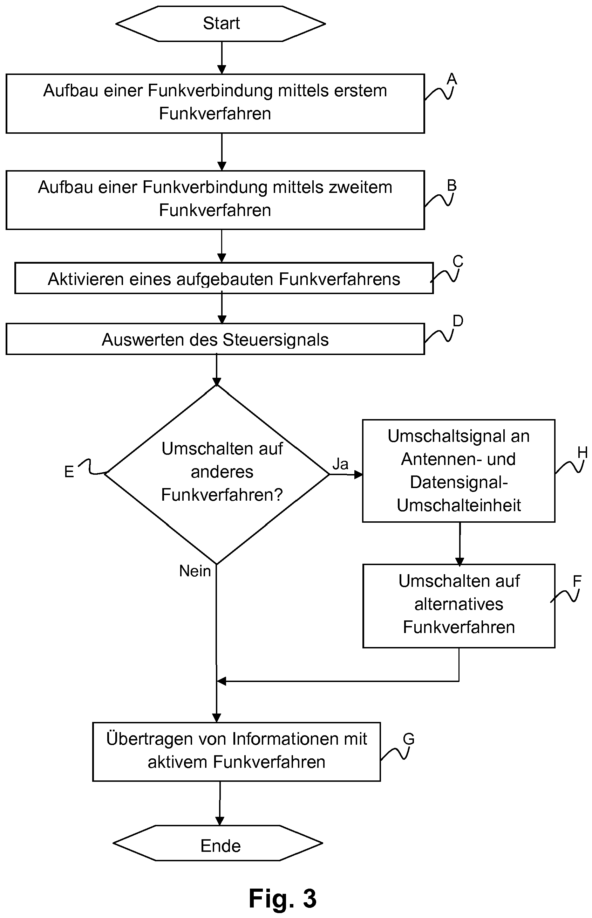

In Fig. 3 ist ein Ausführungsbeispiel eines erfindungsgemäßen Verfahrens anhand eines Verfahrensablaufdiagramms dargestellt. Dabei wird in einem Schritt A der Aufbau einer Funkverbindung mittels eines ersten Funkverfahrens erwirkt. Im Schritt B erfolgt der Aufbau einer Funkverbindung mittels zweitem Funkverfahren. Das erste Funkverfahren ist vom zweiten Funkverfahren unterschiedlich. Insbesondere ist das erste Funkverfahren mittels der statischen Funkeinheit 2 aufgebaut. Insbesondere ist das zweite Funkverfahren des Schritts B mit einer dynamischen Funkeinheit 3 aufgebaut. Im Schritt C wird zumindest eines der aufgebauten Funkverfahren aktiviert. Ab diesem Zeitpunkt ist das Übertragen von Informationen mittels des Funkgeräts 1 über eine der Funkeinheiten 2, 3, 31, 32 möglich. Insbesondere ist vorgesehen, dass mehrere Funkverfahren gleichzeitig aktiviert sind oder zumindest in einem Bereitschaftsmodus aktivierbar sind.

Im Schritt D erfolgt das Auswerten des Steuersignals 10. Das Steuersignal 10 ist als externes Steuersignal 10 an die Funkgerätsteuereinheit 5 angeschaltet, um anzuzeigen, ob sich die Art von Informationen geändert hat. Im Schritt E wird überprüft, inwieweit das Auswerteergebnis aus Schritt D ein Umschalten auf ein anderes Funkverfahren bedingt. Ergibt der Schritt E, dass kein Umschalten auf ein alternatives Funkverfahren nötig ist, so erfolgt das Übertragen der Informationen mit dem bislang aktivierten Funkverfahren gemäß Schritt G. Ergibt der Überprüfensschritt E, dass ein Umschalten auf ein anderes Funkverfahren notwendig ist, so wird im Folgeschritt H ein Umschaltsignal 51 an die Antennen- und Datensignal-Umschalteinheit 6, 8 angeschaltet. Das Umschaltsignal 51 wird mittels der Funkgerätsteuereinheit 5 generiert. Im Folgeschritt F erfolgt das Umschalten auf ein alternatives Funkverfahren, erwirkt mittels einer alternativen Funkeinheit. Ist das Umschalten gemäß Schritt F erfolgt, wird die Information mit der nunmehr aktiven Funkeinheit gemäß Schritt G übertragen.

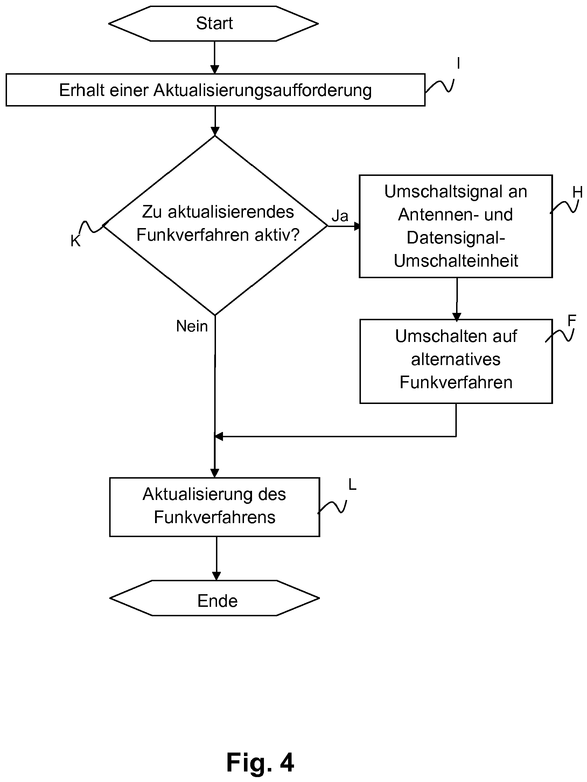

In Fig. 4 ist eine Weiterbildung des in Fig. 3 gezeigten Ausführungsbeispiels des erfindungsgemäßen Verfahrens dargestellt. Zunächst wird im Schritt I eine Aktualisierungsaufforderung erhalten. Diese Aufforderung wird über ein Aktualisierungssignal 9 extern an das Funkgerät 1 angeschaltet. In einem Folgeschritt K ist zu prüfen, ob das zu aktualisierende Funkverfahren in einem aktiven Funkverbindungsmodus ist. Ist dies nicht der Fall, wird im Folgeschritt L die Aktualisierung des Funkverfahrens dahingehend veranlasst, dass das Aktualisierungssignal 10 an die Funkgerätsteuereinheit 5 angeschaltet wird, woraufhin ein Aktualisierungsinformationssignal 52 an die dynamische Funkeinheit 3 weitergeleitet wird. Die Aktualisierungsinformation 52 kann einerseits die Verbesserung eines bereits integrierten dynamischen Funkverfahrens sein. Alternativ ist vorgesehen, dass die Aktualisierungsinformation 52 ein komplett neues und bislang nicht im Funkgerät 1 befindliches Funkverfahren in die dynamische Funkeinheit integriert.

Ergibt der Schritt K, dass das zu aktualisierende Funkverfahren bereits aktiv ist, wird im Folgeschritt H ein Umschaltsignal 51 an die Antennen- und Datensignal-Umschalteinheit gesendet. Im Folgeschritt F wird das Umschalten auf ein alternatives Funkverfahren initialisiert, sodass die Aktualisierung des Funkverfahrens gemäß Schritt L erfolgen kann.

Über die Steuerschnittstelle kann das Steuersignal 10 eingebracht werden. Dabei nimmt der Anwender die Umschaltung gemäß Schritt F zwischen den Funkeinheiten 2, 3, 31, 32 selbst vor. Der Anwender kann die Umschaltung über ein explizites Kommando vornehmen. Alternativ erkennt eine Gerätekonfiguration des Funkgeräts 1 selbständig anhand einer Auswertung der zu übertragenden Informationen, welche Funkeinheit 2, 3, 31, 32 für die Übertragung am geeignetsten ist und generiert das entsprechende Umschaltsignal 51.

Insbesondere enthält das Aktualisierungssignal 9 eine Information, dass ein additives Funkverfahren nachgeladen werden kann. Unverändert bleibt das Kernfunkverfahren in der statischen Funkeinheit 2.

Die Datensignal-Umschalteinheit 8 ist vorgesehen, um zu sendende Dateninformationen und/oder Sprachinformationen einem der Funkeinheiten 2, 3, 31, 32 zuzuführen bzw. mittels der Antenne 4 empfangene Dateninformationen und/oder Sprachinformationen von einem der Funkeinheiten 2, 3, 31, 32 über die Datensignalschnittstelle einem Anwender bereitzustellen. Die Datensignalschnittstelle ist demensprechend bidirektional ausgestaltet. Eine Steuerung dieser Datensignal-Umschalteinheit 8 erfolgt über die Funkgerätesteuerungseinheit 5.

Die dynamische Funkeinheit 3 umfasst insbesondere eine Mehrzahl von dynamischen Funkeinheiten. Dabei können eine erste dynamische Funkeinheit 31 und eine zweite dynamische Funkeinheit 32 vorgesehen sein. Die dynamischen Funkeinheiten 31, 32 sind eigenständige Funkeinheiten zwischen denen umgeschaltet werden kann. Die dynamischen Funkeinheiten 31, 32 sind insbesondere erweiterbar, wodurch additive Funkverfahren in das Funkgerät 1 integriert werden können. Es ist überdies vorgesehen, dass weitere dynamische Funkverfahren über die Aktualisierungsschnittstelle 9 an das Funkgerät 1 übertragen und in das Funkgerät 1 integriert werden. Dadurch kann das Funkgerät 1 für neue Wellenformen, verbesserte Verschlüsselungsalgorithmen und oder Fehlerbeseitigungen stets auf dem neuesten Entwicklungsstand gehalten werden.

Bevorzugt sind immer alle Funkeinheiten 2, 3, 31, 32 aktiv, wobei nur eines über die Datensignal-Umschalteinheit 8 mit dem Anwender verbunden ist. Sollten im Funkgerät 1 nicht genügend Hardwareressourcen zur Verfügung stehen, um alle Funkeinheiten 2, 3, 31, 32 aktiviert zu halten, so ist insbesondere die statische Funkeinheit 2 und zumindest eine der dynamischen Funkeinheiten 3 aktiviert, sodass beim Wechsel der Funkverfahren verzögerungsfrei operiert werden kann.

Insbesondere die dynamische Funkeinheit 3 ist mittels eines externen Aktualisierungssignals 9 aktualisierbar. Hier können insbesondere sehr komplexe Funkverfahren integriert sein, die aufwendige Verschlüsselungen und/oder charakteristische Wellenformen beinhalten. Insbesondere die statische Funkeinheit 2 ist sehr einfach aufgebaut, wohingegen die dynamischen Funkeinheiten 3, 31, 32 komplex aufgebaut sein können.

## Patentansprüche

1. Funkgerät (1) zum Übertragen von Informationen aufweisend eine Funkgerätesteuereinheit (5), zumindest eine Antenne (4), eine Antennen-Umschalteinheit (6) und mindestens zwei Funkeinheiten (2, 3, 31, 32), wobei das Funkgerät (1) eine nicht von außerhalb des Funkgeräts (1) veränderbare, also statische Funkeinheit (2) und zumindest eine von außerhalb des Funkgeräts (1) veränderbare, also dynamische Funkeinheit (3, 31, 32) aufweist, **dadurch gekennzeichnet, dass** jede der Funkeinheiten im Funkgerät ein spezifisches Funkverfahren anwendet und zumindest zwei der Funkeinheiten (2, 3, 31, 32) vor einem Umschaltzeitpunkt bereits eine Kommunikationsverbindung mit einem Kommunikationsteilnehmer aufbauen, also funkbereit sind, sodass mittels eines Umschaltsignals (51) der Funkgerätesteuereinheit (5) verzögerungsfrei zwischen den funkbereiten Funkeinheiten (2, 3, 31, 32) und somit zwischen deren Funkverfahren umgeschaltet werden kann.

2. Funkgerät nach Anspruch 1,
wobei die statische Funkeinheit (2) mit einem Zertifikat einer autorisierten Zertifizierungsstelle zertifiziert ist.

3. Funkgerät nach Anspruch 1 oder 2,
wobei die zumindest eine dynamische Funkeinheit (3) mittels einer Aktualisierungsinformation (52) der Funkgerätesteuereinheit (5) aktualisierbar ist.

4. Funkgerät nach Anspruch 3,
wobei die Aktualisierungsinformation (52) mittels eines externen Aktualisierungssignals (9) an die Funkgerätesteuereinheit (5) anschaltbar ist.

5. Funkgerät nach einem der vorhergehenden Ansprüche, wobei die statische Funkeinheit (2) und zumindest eine dynamische Funkeinheit (3, 31, 32) parallel betreibbar sind, wobei zumindest eine der parallel betreibbaren Funkeinheiten (2, 3) zum Übertragen von Informationen aktiviert ist.

6. Funkgerät nach einem der vorhergehenden Ansprüche, wobei das Umschaltsignal (51) ein externes Steuersignal (10) ist.

7. Funkgerät nach einem der vorhergehenden Ansprüche, wobei sowohl die statische Funkeinheit (2) als auch die Funkgerätesteuereinheit (5) unveränderbar im Funkgerät (1) integriert sind.

8. Funkgerät nach einem der vorhergehenden Ansprüche, wobei die Informationen über eine Datenschnittstelle (7) an das Funkgerät (1) angeschaltet werden und wobei in Abhängigkeit von der Art der Information zwischen den Funkeinheiten (2, 3, 31, 32) umgeschaltet wird.

9. Funkgerät nach Anspruch 8,
wobei die Datenschnittstelle (7) eine Datensignal-Umschalteinheit (8) aufweist und wobei die Datensignal-Umschalteinheit (8) das Umschaltsignal (51) der Funkgerätsteuereinheit (5) empfängt.

10. Funkgerät nach einem der vorhergehenden Ansprüche, wobei das Funkgerät (1) zumindest eine erste dynamische Funkeinheit (31) und eine zweite dynamische Funkeinheit (32) aufweist.

11. Funkgerät nach einem der vorhergehenden Ansprüche, wobei die Antennen-Umschalteinheit (6) im Funkgerät (1) vorgesehen ist, um die jeweilige Funkeinheit (2, 3, 31, 32) an die Antenne (4) anzuschalten.

12. Verfahren zum Übertragen von Informationen mittels eines Funkgeräts (1) gemäß einem der vorhergehenden Ansprüche, mit den Verfahrensschritten:
- Aufbau (A) einer Funkverbindung mittels eines ersten Funkverfahrens;
- Aufbau (B) zumindest einer Funkverbindung mittels eines zweiten Funkverfahrens;
- Aktivieren (C) eines aufgebauten Funkverfahrens;
- Auswerten (D) eines Steuersignals (10) mittels der Funkgerätsteuereinheit (5);
- Überprüfen (E) des Umschaltens auf ein alternatives Funkverfahren mittels der Funkgerätsteuereinheit (5);
- Umschalten (F) auf das alternative Funkverfahren für den Fall, dass der Überprüfschritt (E) ein Umschalten fordert; und
- Übertragen (G) der Information mit dem alternativen Funkverfahren.

13. Verfahren nach Anspruch 12,
wobei vor dem Schritt des Umschaltens (F) ein Umschaltsignal (51) mittels der Funkgerätsteuereinheit (5) erzeugt (H) wird.

14. Verfahren nach Anspruch 12 oder 13,
wobei zu irgendeinem Zeitpunkt:
- eine Aktualisierungsaufforderung zumindest einer der aufgebauten Funkverbindungen erhalten wird (I);
- ein Überprüfen (K) der Umschalt-Notwendigkeit erfolgt;
- ein Umschalten (F) auf ein alternatives Funkverfahren für den Fall erfolgt, falls der Überprüfschritt (K) ein Umschalten fordert; und
- das zu aktualisierende Funkverfahren aktualisiert (L) wird.

## Claims

1. Radio device (1) for transmitting information having a radio device control unit (5), at least one antenna (4), an antenna switchover unit (6) and at least two radio units (2, 3, 31, 32), wherein the radio device (1) has a radio unit (2) which cannot be changed from outside the radio device (1) and is therefore static and at least one radio unit (3, 31, 32) which can be changed from outside the radio device (1) and is therefore dynamic,
**characterised in that** each of the radio units in the radio device uses a specific radio method and at least two of the radio units (2, 3, 31, 32) establish a communications connection with a communications party before a switchover time and are therefore radio ready so that it is possible to switch over between the radio ready radio units (2, 3, 31, 32) and thus between their radio methods without delay by means of a switchover signal (51) from the radio control unit (5).

2. Radio device according to claim 1,
wherein the static radio unit (2) is certified with a certificate of an authorised certification body.

3. Radio device according to claim 1 or 2,
wherein the at least one dynamic radio unit (3) can be updated by means of updating information (52) from the radio device control unit (5).

4. Radio device according to claim 3,
wherein the updating information (52) can be supplied to the radio device control unit (5) by means of an external updating signal (9).

5. Radio device according to one of the preceding claims,
wherein the static radio unit (2) and at least one dynamic radio unit (3, 31, 32) can be operated in parallel, wherein at least one of the radio units (2, 3) that can be operated in parallel is activated to transmit information.

6. Radio device according to one of the preceding claims,
wherein the switchover signal (51) is an external control signal (10).

7. Radio device according to one of the preceding claims,
wherein both the static radio unit (2) and the radio device control unit (5) are integrated in the radio device (1) in such a way that they cannot be changed.

8. Radio device according to one of the preceding claims,
wherein the information is supplied to the radio device (1) by means of a data interface (7) and wherein switching over is carried out between the radio units (2, 3, 31, 32) depending on the nature of the information.

9. Radio device according to claim 8,
wherein the data interface (7) has a data signal switchover unit (8) and wherein the data signal switchover unit (8) receives the switchover signal (51) from the radio device control unit (5).

10. Radio device according to one of the preceding claims,
wherein the radio device (1) has at least a first dynamic radio unit (31) and a second dynamic radio unit (32).

11. Radio device according to one of the preceding claims,
wherein the antenna switchover unit (6) is provided in the radio device (1) in order to switch over the respective radio unit (2, 3, 31, 32) to the antenna (4).

12. Method for transmitting information by means of a radio device (1) according to one of the preceding claims, with the method steps:
- establishment (A) of a radio connection by means of a first radio method;
- establishment (B) of at least one radio connection by means of a second radio method;
- activation (C) of an established radio method;
- evaluation (D) of a control signal (10) by means of the radio device control unit (5);
- checking (E) of the switchover to an alternative radio method by means of the radio device control unit (5);
- switchover (F) to the alternative radio method in the event that the checking step (E) indicates the need for a switchover;
and
- transmission (G) of the information with the alternative radio method.

13. Method according to claim 12,
wherein before the switchover step (F) a switchover signal (51) is produced (H) by means of the radio device control unit (5).

14. Method according to claim 12 or 13,
wherein at any time:
- an updating request is received (I) for at least one of the established radio connections;
- a check is made (K) on the need for switching over;
- a switchover is made (F) to an alternative radio method in the event that the checking step (K) indicates the need for a switchover; and
- the radio method to be updated is updated (L).

## Revendications

1. Appareil radio (1) destiné à la transmission d'informations, comprenant une unité de commande (5) d'appareil radio, au moins une antenne (4), une unité de commutation (6) d'antenne et au moins deux unités radio (2, 3, 31, 32),
dans lequel l'appareil radio (1) comprend une unité radio (2) non modifiable depuis l'extérieur de l'appareil radio (1), autrement dit statique, et au moins une unité radio (3, 31, 32) modifiable depuis l'extérieur de l'appareil radio (1), autrement dit dynamique, **caractérisé en ce que**
chacune des unités radio de l'appareil radio recourt à un procédé de radio-transmission spécifique et au moins deux des unités radio (2, 3, 31, 32) établissent déjà une liaison de communication avec un participant à la communication antérieurement à un moment de commutation, autrement dit sont prêtes pour une liaison radio,
si bien qu'un signal de commutation (51) de l'unité de commande (5) d'appareil radio permet de commuter sans délai entre les unités radio (2, 3, 31, 32) prêtes pour une liaison radio et par conséquent entre les procédés de transmission de celles-ci.

2. Appareil radio selon la revendication 1,
dans lequel l'unité radio statique (2) est certifiée par un certificat d'une instance de certification autorisée.

3. Appareil radio selon la revendication 1 ou 2,
dans lequel ladite au moins une unité radio dynamique (3) peut être mise à jour au moyen d'une information d'actualisation (52) de l'unité de commande (5) d'appareil radio.

4. Appareil radio selon la revendication 3,
dans lequel l'information d'actualisation (52) peut être connectée à l'unité de commande (5) d'appareil radio au moyen d'un signal d'actualisation (9) externe.

5. Appareil radio selon l'une des revendications précédentes,
dans lequel l'unité radio statique (2) et au moins une unité radio dynamique (3, 31, 32) peuvent être mises en service en parallèle, dans lequel au moins une des unités radio (2, 3) pouvant être mises en service en parallèle est activée pour la transmission d'informations.

6. Appareil radio selon l'une des revendications précédentes,
dans lequel le signal de commutation (51) est un signal de commande (10) externe.

7. Appareil radio selon l'une des revendications précédentes,
dans lequel l'unité radio statique (2) ainsi que l'unité de commande (5) d'appareil radio sont intégrées de manière non modifiable dans l'appareil radio (1).

8. Appareil radio selon l'une des revendications précédentes,
dans lequel les informations sont connectées à l'appareil radio (1) via une interface de données (7), et dans lequel une commutation est effectuée entre les unités radio (2, 3, 31, 32) en fonction de la nature de l'information.

9. Appareil radio selon la revendication 8,
dans lequel l'interface de données (7) comprend une unité de commutation de signal de données (8), et dans lequel l'unité de commutation de signal de données (8) reçoit le signal de commutation (51) de l'unité de commande (5) d'appareil radio.

10. Appareil radio selon l'une des revendications précédentes,
dans lequel l'appareil radio (1) comprend au moins une première unité radio dynamique (31) et une deuxième unité radio dynamique (32).

11. Appareil radio selon l'une des revendications précédentes,
dans lequel l'unité de commutation (6) d'antenne est prévue dans l'appareil radio (1) pour connecter l'unité radio (2, 3, 31, 32) respective à l'antenne (4).

12. Procédé de transmission d'informations au moyen d'un appareil radio (1) selon l'une des revendications précédentes, comprenant les étapes suivantes :
- établissement (A) d'une liaison radio au moyen d'un premier procédé de radio-transmission ;
- établissement (B) d'au moins une liaison radio au moyen d'un deuxième procédé de radio-transmission ;
- activation (C) d'un procédé de radio-transmission établi ;
- analyse (D) d'un signal de commande (10) au moyen de l'unité de commande (5) d'appareil radio ;
- contrôle (E) de la commutation vers un procédé de radio-transmission alternatif au moyen de l'unité de commande (5) d'appareil radio ;
- commutation (F) vers le procédé de radio-transmission alternatif au cas où l'étape de contrôle (E) exige une commutation ;
et
- transmission (G) de l'information par le procédé de radio-transmission alternatif.

13. Procédé selon la revendication 12,
dans lequel, préalablement à l'étape de commutation (F), un signal de commutation (51) est généré (H) au moyen de l'unité de commande (5) d'appareil radio.

14. Procédé selon la revendication 12 ou 13,
dans lequel, à un moment quelconque :
- une demande de mise à jour d'au moins une des liaisons radio établie est reçue (I) ;
- un contrôle (K) de la nécessité de commutation est effectué ;
- une commutation (F) vers un procédé de radio-transmission alternatif est effectuée au cas où l'étape de contrôle (K) exige une commutation ; et
- le procédé de radio-transmission à mettre à jour est actualisé (L).
